(19) Europäisches Patentamt
European Patent Office
Office européen des brevets

(11) **EP 3 839 953 A1**

(12) **EUROPEAN PATENT APPLICATION**

(43) Date of publication:
**23.06.2021 Bulletin 2021/25**

(51) Int Cl.:
***G11B 27/10*** *(2006.01)*     ***G10L 15/26*** *(2006.01)*
***H04N 21/2343*** *(2011.01)*     ***H04N 21/845*** *(2011.01)*

(21) Application number: **19306686.7**

(22) Date of filing: **18.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicants:
• **Institut Mines Telecom
91120 Palaiseau (FR)**
• **France Televisions
75015 Paris (FR)**

(72) Inventors:
• **ZAHARIA, Titus
91000 EVRY (FR)**
• **PARMENTIER, Matthieu
86000 POITIERS (FR)**
• **TAPU, Ruxandra
Bucarest (RO)**
• **MOCANU, Bogdan
BUCAREST (RO)**

(74) Representative: **Nony
11 rue Saint-Georges
75009 Paris (FR)**

(54) **AUTOMATIC CAPTION SYNCHRONIZATION AND POSITIONING**

(57) « Method of automatically synchronizing a caption transcript, made of phrases having initial timestamps, with a video stream, comprising:
a. generating an audio transcript of the video stream using automatic speech recognition, timestamps being associated to tokens of the audio transcript,
b. tokenizing the caption transcript and assigning estimated timestamps to tokens,
c. comparing tokens of the caption transcript with tokens of the audio transcript to identify *anchor words* in the caption transcript corresponding to tokens of the caption transcript matching with tokens of the audio transcript,
d. assigning to the anchor words the timestamps of the corresponding tokens in the audio transcript, and
e. shifting initial timestamps of the phrases of the caption transcript based on time differences between anchor words and corresponding tokens of the caption transcript so as to assign final timestamps to the phrases of the caption transcript and synchronize the caption transcript with the video stream. »

Fig. 1

EP 3 839 953 A1

**Description**

The present invention relates to methods for synchronizing captions with a video stream and positioning them on frames.

In the last years, the volume of available live programs transmitted over Internet has known an exponential growth. In order to facilitate the access to information, most European TV broadcasters transmit and distribute, together with the audio and video signals, textual information. Most often, such information is present under the form of video captions. Even though the captions do not match exactly the speech and correspond rarely to the exact word utterance, the associated text document (developed by a human transcriber) captures all the semantic value according to the available visual space and slot of time.

Yet, the text document produced by the human transcriber suffers overall from severe misalignments with the audio channel, because of the manual production process involved. This problem of misalignment between the captions and the audio stream becomes critical in the case of live scenarios. A captioning environment is set up in the studio, where a regular human develops on-the-fly the captions. The associated textual content is delivered several seconds after the speech fragment. For this reason, most of the live-transmitted TV programs have a significant delay (up to 30 seconds) between the audio stream and the moment in time when the corresponding subtitle/caption is ready to be displayed on the screen. Therefore, the caption delivered to the user is unsynchronized. Moreover, the delay between the textual and visual information may be different for various parts of the caption. This effect is highly disturbing and can strongly affect the viewer comprehension.

One solution to overcome this limitation, largely adopted by TV broadcasters, is obtained with the help of program replay. In this case, as the caption is available in advance, a temporal re-alignment process can be manually performed by human specialists, as described in the article J.E. Garcia et al. "Audio and text synchronization for TV news subtitling based on Automatic Speech Recognition". However, such a solution is costly and time consuming.

The state-of-the-art techniques that tackle the issue of misalignment between the captions and the audio channel are mostly based on Automatic Speech Recognition (ASR) systems, previously trained on various datasets and language models in combination with a video decoder, in order to adjust the timestamps of the video captions. The main difficulty encountered when building a speech recognizer in a new target language is related to the availability of manually transcripts and aligned training data.

One of the first papers addressing the issue of aligning very long audio files to their corresponding textual transcripts is introduced in the publication P. J. Moreno et al. "A recursive algorithm for the forced alignment of very long audio segments". The key principle of the proposed algorithm relies on a speech recognition procedure that gradually restricts the dictionary and the language model. In addition, the authors introduce the concept of anchor words (islands of confidence) that are likely to be aligned correctly based on an acoustic confidence metric. An iterative procedure is then applied in order to successively refine and optimize the alignment between anchors.

In the publication P. Wambacq et al. "Efficiency of Speech Alignment for Semi-Automated Subtitling in Dutch", the speech recognizer aligns the audio stream with an existing transcript. The system therein performs subtasks such as audio segmentation, transcript preprocessing, alignment and caption compression.

Other techniques disclosed in the publications A. Katsamanis et al. "SailAlign: Robust long speech-text alignment", T. J. Hazen "Automatic alignment and error correction of human generated transcripts for long speech recordings", N. Braunschweiler et al. "Lightly supervised recognition for automatic alignment of large coherent speech recordings", A. Haubold et al. "Alignment of Speech to Highly Imperfect Text Transcriptions", S. Hoffman et al. "Text-to-speech alignment of long recordings using universal phone models", I. Ahmed et al. "Technique for automatic sentence level alignment of long speech and transcripts" and X. Anguera et al. "Audio-to-text alignment for speech recognition with very limited resources" use speech recognition to align the captions with the audio stream.

In most of the cases, the synchronization of the audio tracks with the text transcripts is typically solved by forced alignment performed at the phonetic level. However, such approaches show quickly their limitations when dealing with very long audio tracks or acoustically inaccurate text transcripts. In such cases, a more sophisticated analysis is required. To this purpose, in the article G. Bordel et al. "Probabilistic Kernels for Improved Text-to-Speech Alignment in Long Audio Tracks", the authors propose using probabilistic kernels (similarity functions) about the speaker behavior in order to improve the text alignment. Recently, in the article B. Axtell et al. "Touch-Supported Voice Recording to Facilitate Forced Alignment of Text and Speech in an E-Reading Interface", in order to handle the variability of amateur reading and improve the performance of text alignment systems, the authors introduce a human in the loop approach. They propose to use a finger text tracker in order to implement metaphors (anchor points) recorded during the collocated, read-aloud session using tablet e-readers.

Even though the ASR can potentially return accurate synchronization between audio and text, reliable ASR for all portions of the video stream is a difficult task, mainly due to high variability of the spoken environments, speakers and speech types. Spoken environments can vary from clean settings (*e.g.,* studio recordings) to noisy scenes (*e.g.,* outdoor recordings, speech mixed with background music or effects). The reader speaking may be classified into two major classes: dictation (*e.g.,* the newsreader presenter) and spontaneous (*e.g.,* interviews taken on the street, debates or talk-shows). In addition, the ASR technology needs to deal with uncontrolled vocabulary (especially for movies or TV programs). Any system dedicated to robust caption alignment should carefully take into account such issues. A second challenge that arises when performing the synchronization is to determine what technique to apply when the text transcript does not match exactly the spoken words of the media. In most of the cases, when a media creator edits the transcripts, it removes the grammatical errors or other types of extraneous words spoken repeatedly during the course of the audio stream (*e.g.,* anyway, so, uh, aha, etc.). Even more challenging are the cases when the person's speech frequency is very high and the transcriber cannot follow all transmitted information. In this case, the captioner reformulates the idea in fewer phrases that are not perfectly correlated with the audio stream. The third challenge that needs to be overcome is the time necessary to perform the alignment. In addition, the cost of such systems should not be excessive for the Television Companies.

For a caption transcript, four major types of errors can appear:

- spelling errors: corresponding to words that were missed, added or misspelled by the transcriber;
- interpretation errors: the transcriber paraphrases or replaces the correct word with a similar one;
- group errors: represent a set of words or phrases that are skipped in the closed captions from the transcript;
- repeated words or lines: correspond to words that are typed twice or multiple times by mistake.

In the ASR output, three types of errors have been identified:

- homophone substitution errors: represent errors generated by the ASR software that substitutes a correct word with its phonemes rather than the complete word;
- mis-interpretation errors: the ASR replaces a word with a different one;
- group errors: represent a set of words that are missed entirely from the audio stream by the ASR.

Besides, captions are typically placed at the bottom-center of the screen. However, placing captions in varying positions, according to the underlying video content has the potential to make the overall viewing experience less disjointed and more immersive. The paper A. Brown et al. "Dynamic Subtitles: the User Experience" describes the testing of such captions with hearing-impaired users, and an analysis of previously collected eye-tracking data. The qualitative data demonstrates that dynamic captions can lead to an improved user experience.

So far, few solutions have been proposed to solve the problem of spatial positioning of captions in the video frames based on their visual content.

Thus, there remains a need to further improve current techniques of synchronizing captions with a video stream, and also adequately positioning them on the video frames.

The present invention aims to meet this need and one object of the invention, according to a first of its aspects, is a method for automatically synchronizing with a video stream a caption transcript made of phrases each having an initial phrase timestamp defining a start time and an end time of the phrase the method comprising:

a. generating an audio transcript of the video stream using automatic speech recognition, with timestamps associated to words of the audio transcript,
b. tokenizing both caption and audio transcripts and estimating timestamps of tokens of the caption transcript based at least on the initial phrase timestamp of the phrase containing said tokens and their position within the phrase,
c. identifying anchor words in the caption transcript corresponding to tokens of the caption transcript orthographically matching with tokens of the audio transcript,
d. assigning to the anchor words corrected timestamps corresponding to timestamps of the matching tokens in the audio transcript, and
e. generating a synchronized caption transcript with final phrase timestamps obtained by applying to the phrases' initial timestamps time shifts based on time differences between the assigned timestamps of the anchor words and the estimated timestamps of said anchor words.

Captions are sometimes also called subtitles. Here, the captions are in the same language as the audio stream.

The method according to the invention allows to automatically align the caption transcript with the audio of the video stream in an accurate manner and without requiring any human intervention.

Unlike other approaches of the state of the art, the method according to the invention does not focus on the ASR training or on the data acquisition, but on efficient ways to use anchor words in order to position the text transcript in noisy scenes or with multiple speaking persons.

Preferably, tokenizing in step b) comprises at least one of:

- removing punctuation and non-alphabetic characters in both transcripts,
- converting upper-case words into lower-case in both transcripts,
- removing words with less than four characters from both transcripts,
- stemming the words in both transcripts, and
- removing words from both transcripts, said words belonging to a library comprising a set of words considered to be very common, especially logic linkers.

Removal of very common words from both transcripts increases the discriminating power of the extracted tokens.

The tokenization of both transcripts allows to convert them into a standard form, in order to increase the matching probability between words of the caption transcripts and those of the audio transcript.

The estimation of the timestamps of the caption transcript's tokens preferably comprises the estimation of a start time (denoted by $ST_{INIT}$) and an end time (denoted by $ET_{INIT}$) for at least one timestamp of at least one token pertaining to one phrase, according to the equations:

$$ST_{INIT} = ST_{PHRASE\_INIT} + Time\_per\_character_{INIT} * No_{CHAR_{TO_{TOKEN}}}$$

and

$$ET_{INIT} = ST_{INIT} + Time\_per\_character_{INIT} * No_{CHAR\_OF\_TOKEN},$$

wherein $Time\_per\_character_{INIT}$ designates the time increment assigned
to each character within said one phrase and is defined by:

$$Time\_per\_character_{INIT} = \frac{ET_{PHRASE\_INIT} - ST_{PHRASE\_INIT}}{No_{CHARACTERS\_PHRASE}}$$

wherein $No_{CHARACTERS\_PHRASE}$ designates the number of characters within the phrase, $ST_{PHRASE\_INIT}$ the phrase start time, $ET_{PHRASE\_INIT}$ the phrase end time, $No_{CHAR\_OF\_TOKEN}$ the number of characters of said one token and $No_{CHAR_{TO_{TOKEN}}}$ the number of characters covered, within the phrase, until the token, being obtained from the caption transcript before its tokenization.

The identification in step c) preferably comprises, for a current token of the caption transcript, searching in the audio transcript for matches with said token within a temporal search window where a forward and backward search procedure, with reference to said token, is applied with a maximum time shift in each direction of search, defining a number of forward and backward neighboring tokens in the caption transcript, the temporal search window especially varying between 30 and 90 seconds in each direction of search.

Then, preferably:

- when a unique match is identified in the audio transcript, said token of the caption transcript is declared as an anchor word, otherwise:
- said token of the caption transcript is declared as an anchor word if at least one condition relating to temporal distances is fulfilled, a temporal distance being defined as the absolute difference between two start times, said at least one condition being defined by the equation:

$$\forall\, T_i^{CC} \in \mathcal{N}(T_c^{CC}), \quad d^{ASR}(T_c^{CC}, T_i^{CC}) \le \alpha \cdot d^{CC}(T_c^{CC}, T_i^{CC})$$

wherein $T_c^{CC}$ designates said token,

$$\mathcal{N}(T_c^{CC})$$

the set of its neighboring tokens in the caption transcript, $d^{CC}(T_c^{CC}, T_i^{CC})$ the temporal distance between the said token's estimated start time and the estimated start time of one of its neighbors in the caption transcript, $\alpha$ a user-specified parameter, preferably being set in the [2, 4] interval, and $d^{ASR}(T_c^{CC}, T_i^{CC})$ the temporal distance between the start time of said token's one match and the start time of said one of its neighbors' one match in the audio transcript, $d^{ASR}(T_c^{CC}, T_i^{CC})$ being defined by the equation:

$$d^{ASR}\left(T_c^{CC}, T_i^{CC}\right) = \min_{T_i^{ASR} \in \aleph^{ASR}(T_c^{CC})} \min_{T_j^{ASR} \in \aleph^{ASR}(T_i^{CC})} d^{ASR}(T_i^{ASR}, T_j^{ASR})$$

where $\aleph^{ASR}\left(T_i^{CC}\right)$ designates the set of matches with each neighboring token

$$T_i^{CC} \in \mathcal{N}(T_c^{CC})$$

of said token $T_c^{CC}$

The method according to the invention may comprise ignoring two identified anchor words if their chronological order is opposite to the chronological order of their matching tokens in the audio transcript.
Preferably, step e) comprises:

- determining the first and the last anchor words in terms of temporal location in a phrase containing at least one anchor word,
- determining the final timestamp defined by the phrase's final start time

$$(ST_{PHRASE\_FINAL}) \text{ and final end time } (ET_{PHRASE\_FINAL}),$$

as follows:

$$ST_{PHRASE\_FINAL} = ST_{PHRASE\_INIT} + \left(ST_{AW_{FIRST\_FINAL}} - ST_{AW_{FIRST\_INIT}}\right),$$

and

$$ET_{PHRASE\_FINAL} = ET_{PHRASE\_INIT} + \left(ET_{AW_{LAST\_FINAL}} - ET_{AW_{LAST\_INIT}}\right),$$

wherein $ST_{PHRASE\_INIT}$ and $ET_{PHRASE\_INIT}$ respectively designate the phrase initial start and end times, $ST_{AW_{FIRST\_FINAL}}$ and $ST_{AW_{FIRST\_INIT}}$ designate the first anchor word's assigned and estimated start times, respectively, and $ET_{AW_{LAST\_FINAL}}$ and $ET_{AW_{LAST\_INIT}}$ designate the last anchor word's assigned and estimated end times, respectively,

said phrase thus processed being called an *anchor phrase.*
A phrase with no anchor word is preferably synchronized based on anchor phrases and with respect to the temporal duration of said phrase in the initial caption transcript.
The final start time $ST_{PHRASE\_FINAL}$ and the final end time $ET_{PHRASE\_FINAL}$ of the phrase with no anchor word may be determined by the respective equations:

$$ST_{PHRASE\_FINAL} = ET_{PHRASE\_FINAL\_AP_{prev}} + \frac{ST_{PHRASE\_FINAL\_AP_{next}} - ET_{PHRASE\_FINAL\_AP_{prev}}}{ST_{PHRASE\_INIT\_AP_{next}} - ET_{PHRASE\_INIT\_AP_{prev}}} *$$

$$* (ST_{PHRASE_{INIT}} - ET_{PHRASE_{INIT}AP_{prev}}),$$

and

$$ET_{PHRASE\_FINAL} = ST_{PHRASE\_FINAL\_AP_{next}} + \frac{ST_{PHRASE\_FINAL\_AP_{next}} - ET_{PHRASE\_FINAL\_AP_{prev}}}{ST_{PHRASE\_INIT\_AP_{next}} - ET_{PHRASE\_INIT\_AP_{prev}}} *$$

$$* (ET_{PHRASE_{INIT}} - ST_{PHRASE_{INIT}AP_{next}})$$

wherein $ET_{PHRASE\_FINAL\_AP_{prev}}$ designates the final end time of the previous anchor phrase respectively to the phrase with no anchor word, $ST_{PHRASE\_FINAL\_AP_{next}}$ the final start time of the next anchor phrase respectively to the phrase with no anchor word, $ST_{PHRASE\_INIT\_AP_{next}}$ the initial start time of the next anchor phrase respectively to the phrase with no anchor word and $ET_{PHRASE\_INIT\_AP_{prev}}$ the initial end time of the previous anchor phrase respectively to the phrase with no anchor word.

The process of synchronizing phrases insures that no overlap appears between different phrases of the caption transcript.

Further adjustment of the phrases' timestamps can be performed with respect to audio-visual recommendations (for example, those formulated by the CSA Conseil Superieur de l'Audiovisuel in France), especially in order to conform to the adequate time of reading when a phrase is displayed on the screen.

Therefore, the method according to the invention may comprise after step e):

i) expanding the display time of a current phrase whose duration is inferior to a recommended minimum duration for :

- a recommended phrase duration, designated as $REC_{PHRASE_{crt}}$, based on the number of the characters of the phrase being estimated,
- a required bonus duration, denoted by $BONUS_{TIME}$, that represents the offset needed to expand the current phrase in either of the left and right directions, being computed as:

$$BONUS_{TIME} = \frac{REC_{PHRASE_{crt}} - len_{PHRASE_{crt}}}{2},$$

wherein $len_{PHRASE_{crt}}$ designates the duration of the current phrase,
- the time offset between the current and previous phrases being defined as:

$$Space_{prev} = ST_{PHRASE_{crt}} - ET_{PHRASE_{prev}}$$

- if $Space_{prev} > BONUS_{TIME}$, there is sufficient room to expand to the left the current phrase, and its recommended final start time is set to :

$$ST_{PHRASE_{crt}\_FINAL\_REC} = ST_{PHRASE_{crt}\_FINAL} - BONUS_{TIME},$$

wherein $ST_{PHRASE_{crt}\_FINAL}$ designates the final start time of the current phrase,
- if $Space_{prev} < BONUS_{TIME}$, the maximum available dilatation time on the left $DT_{LEFT}$ being computed as:

$$DT_{LEFT} = min \left( \begin{array}{c} BONUS_{TIME} - Space_{prev}, \\ \frac{(len_{PHRASE_{prev}} - REC_{PHRASE_{prev}})}{2} \end{array} \right),$$

wherein $REC_{PHRASE_{prev}}$ designates the recommended duration of the previous phrase and $len_{PHRASE_{prev}}$ designates the duration of the previous phrase,

- 

$$\text{if } DT_{LEFT} < 0, ST_{PHRASE_{crt\_FINAL\_REC}} = ST_{PHRASE_{crt\_FINAL}} - \frac{Space_{prev}}{2}$$

- if $DT_{LEFT} > 0$, $ST_{PHRASE_{crt\_FINAL\_REC}} = ST_{PHRASE_{crt\_FINAL}}$ - $Space_{prev}$ - $DT_{LEFT}$ and the recommended final end time of the previous phrase being set to:

$$ET_{PHRASE_{prev\_FINAL\_REC}} = ET_{PHRASE_{prev\_FINAL}} - DT_{LEFT};$$

wherein $ET_{PHRASE_{prev\_FINAL}}$ designates the final end time of the previous phrase,
- the final start time of the current phrase and the final end time of the previous phrase being set to the computed recommended values:

$$ST_{PHRASE_{crt\_FINAL}} = ST_{PHRASE_{crt\_FINAL\_REC}}$$

$$ET_{PHRASE_{prev\_FINAL}} = ET_{PHRASE_{prev\_FINAL\_REC}}$$

ii) expanding the display time of a current phrase whose duration is inferior to a recommended minimum duration for reading, the expanding on the right side of the phrase being performed as follows:

- a recommended phrase duration, designated as $REC_{PHRASE_{crt}}$, based on the number of the characters of the phrase being estimated,
- the time offset between the current and next phrases being defined as:

$$Space_{next} = ST_{PHRASE_{next}} - ET_{PHRASE_{crt}}$$

- if $Space_{next} > BONUS_{TIME}$, there is sufficient room to expand to the right the current phrase, and its recommended final end time is set to :

$$ET_{PHRASE_{crt\_FINAL\_REC}} = ET_{PHRASE_{crt\_FINAL}} + BONUS_{TIME},$$

wherein $ET_{PHRASE_{crt\_FINAL}}$ designates the final end time of the current phrase,
- if $Space_{next} < BONUS_{TIME}$, the maximum available dilatation time on the right $DT_{RIGHT}$ being computed as:

$$DT_{RIGHT} = min\left( \begin{array}{c} BONUS_{TIME} - Space_{next}, \\ \frac{(len_{PHRASE_{next}} - REC_{PHRASE_{next}})}{2} \end{array} \right),$$

wherein $REC_{PHRASE_{nexi}}$ designates the recommended duration of the next phrase and $len_{PHRASE_{next}}$ designates the duration of the next phrase,

- 

$$\text{if } DT_{RIGHT} < 0, ET_{PHRASE_{crt\_FINAL\_REC}} = ET_{PHRASE_{crt\_FINAL}} + \frac{Space_{next}}{2}$$

- if $DT_{RIGHT} > 0$, $ET_{PHRASE_{crt\_FINAL\_REC}} = ET_{PHRASE_{crt\_FINAL}}$ + $Space_{next}$ + $DT_{RIGHT}$ and the recommended final start time of the next phrase being set to:

$$ST_{PHRASE_{next\_FINAL\_REC}} = ST_{PHRASE_{next\_FINAL}} + DT_{RIGHT},$$

wherein $ST_{PHRASE_{next\_FINAL}}$ designates the final start time of the next phrase,

- the final end time of the current phrase and the final start time of the next phrase being set to the computed recommended values:

$$ST_{PHRASE_{next\_FINAL}} = ST_{PHRASE_{next\_FINAL\_REC}}$$

$$ET_{PHRASE_{crt\_FINAL}} = ET_{PHRASE_{crt\_FINAL\_REC}}$$

The invention, according to a second of its aspects, relates to a method for automatically placing captions on a video stream, the captions pertaining to a caption transcript synchronized with the video stream, preferably by a method according to the invention in its first aspect, comprising positioning the captions on a frame of the video stream according to an analysis of semantic information present in the frame, so that the captions do not overlap textual information present in the frame.

The invention allows to automatically adjust the position of the captions based on the video's visual content. It makes it possible to avoid displaying captions on particular areas of interest that can typically include useful video text information.

The analysis of semantic information present in the frame preferably comprises text detection in the frame using a neural network model trained to predict the existence of text instances and their geometries from full images, the model being especially a fully-convolutional neural network adapted for text detection and outputting dense per-pixel predictions of words or text lines.

Text detection reveals different cases according to the position of the text detected on the frame:

- in case no horizontal text is detected, the captions may be positioned in a default position defined by predetermined display coordinates, preferably on the bottom part of the frame, especially on the lower third of the frame;
- in case horizontal text is detected on the bottom part of the frame, the captions may be attributed a novel location by being moved up so as not to cover the detected text, the novel location being established so as to reduce its distance from the default position;
- in case text is detected in various parts of the frame, including the bottom part, the captions may be moved up to the first available location with the constraint not to overlap any of the detected text;
- in case text is detected in various parts of the frame, including the bottom part, and there is no available position to place the captions to prevent the overlap, the latter may be positioned in the default position, even if they overlap the detected text, with a colored bounding box making them easier to read;
- in case detected text is displayed on the frame only for a short duration, lower than the duration of the caption, while presenting an overlap with the default position, the captions may be placed into a location that insures no overlap with the detected text, even if, for some time, the captions are above the default position and no overlap with the text is detected;
- in case horizontal text is detected on the bottom part of the frame, the captions to be displayed may be placed on the bottom part of the frame if the length of the horizontal text is short enough such that no overlap occurs with the caption.

Thus, the captions are placed in an appropriate position where no overlap with other scene textual information occurs, and which is also comfortable for reading.

Preferably, lines of captions are placed on the video frame in accordance with at least one of the following rules:

- a line length not exceeding a predefined number of monospaced characters,
- a line corresponding to a single complete sentence,
- a maximum number of lines to be displayed being limited to two, and
- captions being broken at logical points, an ideal line-break being preferably a piece of punctuation, e.g. a period, a comma or a dash.

This set of rules allows to enhance the comfort of reading the captions.

Another object of the invention, according to another of its aspects, is a system for automatically synchronizing a caption transcript with a video stream, comprising:

- a synchronization module implementing the method according to the invention in its first aspect, and
- a positioning module implementing the method according to the invention in its second aspect.

The invention will be better understood on reading the following detailed description of non-limiting exemplary embodiments thereof and on examining the appended drawings, in which:

- Figure 1 schematically represents a system according to the invention for automatically synchronizing a caption transcript with a video stream;
- Figure 2 gives an example of text normalization in the caption and audio transcripts;
- Figure 3 schematically represents token assignment to anchor words in the caption transcript;
- Figure 4 schematically illustrates the synchronization of phrases with anchor words in the caption transcript;
- Figure 5 schematically represents the synchronization of phrases with no anchor words in the caption transcript;
- Figure 6 schematically illustrates the synchronized phrases' alignment with respect to recommendations of a given audiovisual standard;
- Figure 7 gives an example of closed caption positioning when no other textual information is present on the video frame;
- Figure 8 gives an example of closed caption positioning when the scene text is detected on the bottom part of the screen;
- Figure 9 gives an example of closed caption positioning when scene text is detected on multiple parts of the video frame;
- Figure 10 gives an example of closed captions placed in a colored bounding box;
- Figures 11(a) and 11(b) give an example of closed caption positioning when a phrase is displayed for several seconds;
- Figures 12(a) and 12(b) give two examples of closed caption positioning for respectively short and long text transcripts.

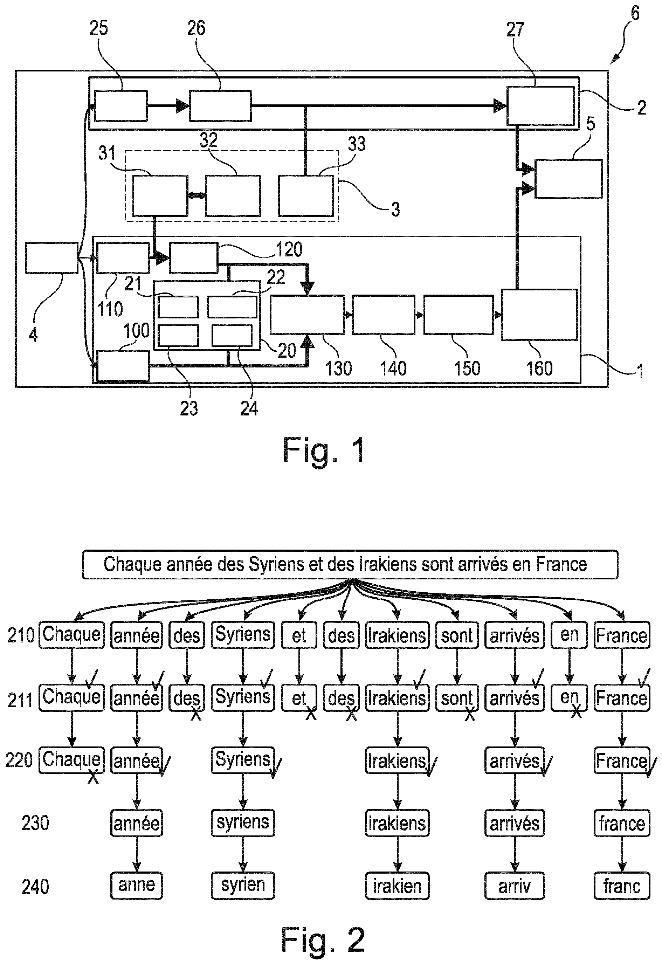

Figure 1 schematically represents a system 6 according to the invention for automatically synchronizing a caption transcript with a video stream.

The system 6 may be implemented on a computer having a microprocessor executing tasks relating to at least one step of the method according to the invention in its first or second aspect, as well as a memory for storing data relevant to the invention.

The system 6 takes as input a multimedia file 4 that contains the audio and video streams that are supposed to be perfectly synchronized. The audio and video streams are associated to an audio document 110 and a video document 25, respectively. Each multimedia file has a starting time ST and an end time ET, which define the timeline for the considered document. To each multimedia file 4, a closed caption document 100 is also associated that includes the caption transcript of the corresponding audio information. The caption transcript is manually generated by a human transcriber and contains a time code for every group of 3-10 words, called phrases.

The system 6 exploits an external module 3 represented in dotted lines comprising three components: a language model toolkit 32, an ASR system 31 and a text detection framework 33, preferably based on Convolutional Neural Networks (CNNs). In the examples that will be given, the ASR system 31 adopts the French language model, takes as input the audio stream of the target video and generates as output an audio transcript with a time code for each identified word. The text detection framework 33 is configured to identify the position of existing text within the video stream. This information makes it possible to adjust the position of the displayed captions in order to avoid overlaps with the visual content, as will be detailed further.

Concerning the ASR system 31, the open-source CMU Sphinx system was adopted, which offers a fair compromise between the system performance and required memory/computational resources. Thus, as shown in the comparative evaluation of ASR systems presented in the technical report C. Huang et al. "Automatic Closed Caption Alignment Based on Speech Recognition Transcripts", carried out on a set of 30 news videos of about 30 min length, the word error rate (WER) achieved by Sphinx is of 35%, which is relatively high. However, for the words that are correctly identified, the ASR is able to accurately capture the timestamps of the audio text transcript. In addition, Sphinx provides an already trained French language model. The ASR system may be based on one of the emerging CNN-based approaches as presented in the publication Z. Ying et al. "Towards end-to-end speech recognition with deep convolutional neural networks" to increase the overall performances.

The system 6 comprises a closed caption synchronization module 1 and a closed caption positioning module 2.

## Closed caption synchronization module

The closed caption synchronization module 1 implements the method according to the invention in its first aspect.

The synchronization method takes as input the caption transcript 100, made of phrases having initial timestamps corresponding to a start time and an end time of each phrase, and the audio transcript 120, provided by the ASR system 31 in step a) of the method.

The synchronization module 1 contains a text processing module 20 implementing the tokenization procedure in step b) of the method.

The text processing module 20 mainly comprises four sub-modules: a token extraction module 21, a common words removal module 22, an accent removal module 23 and a token stemming module 24.

First, both transcripts are divided into atomic units of text known as tokens, where each token is delimited by a white space. This is dealt with by the token extraction module 21. Then, each token is processed to remove all punctuation and non-alphabetic characters. Words with less than four characters are removed from both text transcripts. The common words removal module 22 removes very common words (*e.g.,* in French language: voila, chose, comme, parce que) from both transcripts. In addition, uppercase words are also converted to lowercase words, and accents and diacritics are removed by the removal module 23. Then, in order to obtain normalized texts, the token stemming module 24 proceeds to stemming of both transcripts. For example, the plural form of nouns is transformed into singular, and verbs are no longer conjugated.

An example of text processing of a French sentence is presented in Figure 2. In step 210, the sentence is divided into tokens. Short words of less than four characters are deleted in step 211. In step 220, very common words, in this case the French word "chaque", are deleted. In step 230, accents are also removed. Finally, text stemming is performed in step 240.

The text processing module 20 outputs two token sequences, respectively denoted by $\left\{T_i^{CC}\right\}_{i=1,...,N_{CC}}$ and $\left\{T_j^{ASR}\right\}_{j=1,...,N_{ASR}}$ for the caption transcript and the audio transcript respectively, with $N_{CC}$ and $N_{ASR}$ being the total number of tokens of the caption transcript and the audio transcript respectively.

Each token in the audio transcript has an associated timestamp that provides its precise temporal localization with corresponding start time (ST) and end time (ET). However, this is not the case of the caption transcript's tokens. In the caption transcript, the human transcriber provides solely the timestamps associated to entire phrases, with a phrase start time $ST_{PHRASE\_NIT}$ and end time $ET_{PHRASE\_INIT}$. In order to be able to estimate timestamps of the caption transcript's tokens which are present in a considered phrase, the following procedure is applied. Based on the number of characters within the considered phrase ($No_{CHARACTERS\_PHRASE}$), the initial token word temporal elements ($ST_{INIT}$ and $ET_{INIT}$) are estimated using the following equations:

$$Time\_per\_character_{INIT} = \frac{ET_{PHRASE\_INIT} - ST_{PHRASE\_INIT}}{No_{CHARACTERS\_PHRASE}},$$

$$ST_{INIT} = ST_{PHRASE\_INIT} + Time\_per\_character_{INIT} * No_{CHAR\_TO\_TOKEN},$$

$$ET_{INIT} = ST_{INIT} + Time\_per\_character_{INIT} * No_{CHAR\_OF\_TOKEN},$$

where $No_{CHAR\_TO\_TOKEN}$ indicates the number of characters covered, within the phrase, until the considered token, $No_{CHAR\_OF\_TOKEN}$ designates the number of characters of the current token, and $Time\_per\_character_{INIT}$ represents the time increment assigned to each character within the phrase.

Both parameters $NO_{CHAR\_TO\_TOKEN}$ and $NO_{CHAR\_OF\_TOKEN}$ are obtained from the initial caption transcript, before any text processing.

The synchronization module 1 also comprises a module 130 responsible for the comparison between tokens in both transcripts and a module 140 responsible for anchor words identification. The modules 130 and 140 implement step c) of the method in its first aspect.

In step c), a word alignment algorithm is used to process one by one the closed caption tokens, in order to determine for each of them the corresponding token in the audio transcript. For each closed caption token, a forward/backward search procedure is applied. A maximum time shift on each direction of searching (*i.e.,* forward and backward) is admitted, defining thus a temporal search window. The typical values that have been considered for the forward/backward time shift can vary between 30 and 90 seconds, but this parameter can be tuned for various types of content. When a unique match is identified in the considered search interval, the token is considered as an *anchor word.* If multiple matches are determined for the considered closed caption token, a further analysis is performed. $T_c^{CC}$ denotes the current token under analysis in the caption transcript and

$$\mathcal{N}(T_c^{CC}) = \{T_i^{CC}\}_{i=c-N,\, i\neq c}^{c+N}$$

is the set of its neighboring tokens, with *N* being the number of backward and forward neighboring tokens. The value of *N* has been set to 5, in the experiments carried out by the inventors, in order to avoid increasing the computational complexity.

For each closed caption token in the

$$\mathcal{N}(T_c^{CC})$$

set, the correspondences in the audio transcript are examined as described in the following. $\aleph^{ASR}(T_c^{CC})$ designates the set of tokens in the audio transcript that are matched with the current $T_c^{CC}$ token. In a similar manner, $\aleph^{ASR}(T_i^{CC})$ designates the set of audio transcript's tokens that are matched with each neighboring token

$$T_i^{CC} \in \mathcal{N}(T_c^{CC}).$$

For each pair formed by the current token $T_c^{CC}$ and one of its neighbors $T_i^{CC} \in$

$$\mathcal{N}(T_c^{CC}),$$

two temporal distance values are computed. A first one, denoted $d^{CC}(T_c^{CC}, T_i^{CC}),$ is simply the temporal distance between the two considered tokens, by considering their corresponding timestamps in the caption transcript. For each token, a timestamp is defined as a starting point *ST* and an end point *ET*. The temporal distance of two tokens is defined in this case as the absolute difference between the corresponding starting times. The second distance, denoted $d^{ASR}(T_c^{CC}, T_i^{CC}),$ is computed based on corresponding tokens in the audio transcript and is defined as in the following equation:

$$d^{ASR}(T_c^{CC}, T_i^{CC}) = \min_{T_i^{ASR}\, \in\, \aleph^{ASR}(T_c^{CC})} \min_{T_j^{ASR}\, \in\, \aleph^{ASR}(T_i^{CC})} d^{ASR}(T_i^{ASR}, T_j^{ASR})$$

With the help of the above-defined distances, the current $T_c^{CC}$ token is declared as an anchor word if and only if the following condition is satisfied:

$$\forall\, T_i^{CC} \in \mathcal{N}(T_c^{CC}), \quad d^{ASR}(T_c^{CC}, T_i^{CC}) \leq \alpha \cdot d^{CC}(T_c^{CC}, T_i^{CC}),$$

where a is a user-specified parameter. In the experiments carried out by the inventors, the usual value of parameter a was set in the range [2-4] interval, but other values may be possible, depending on the type of content.

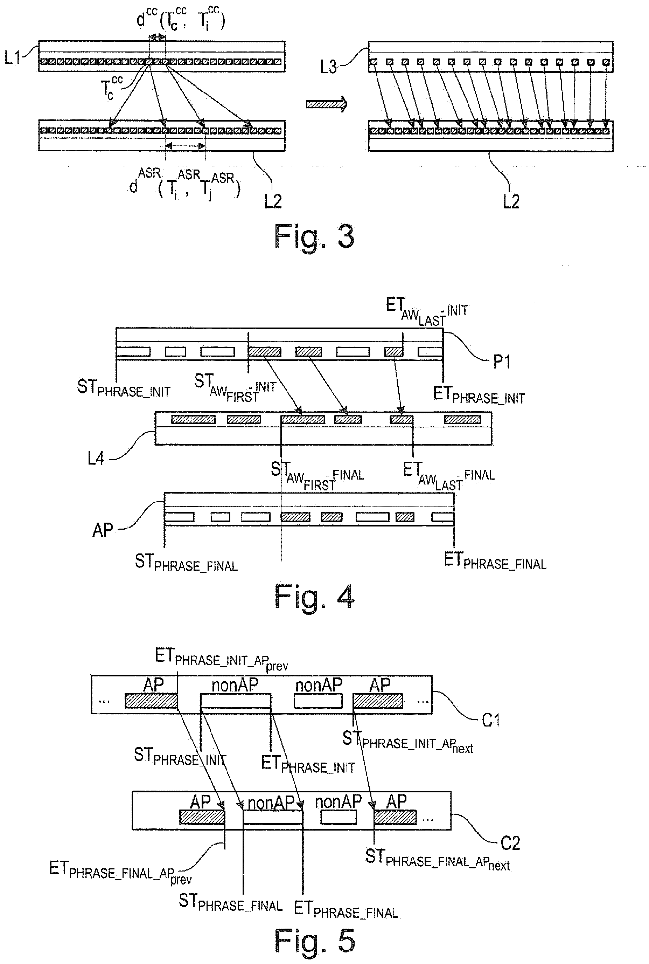

The procedure of anchor words identification is illustrated in Figure 3 on the left side, where the list of tokens in the caption transcript containing the current token $T_c^{CC}$ and its neighbors is referenced by LI, and the list of matching tokens in the audio transcript is referenced by L2.

In some cases, the temporal order of the anchor words matches in the audio transcript may be opposite to the initial order of words in the caption transcript, as illustrated in Figure 3 on the right side where L3 refers to the list of anchor words extracted from L1. Such temporally conflicting anchor words are discarded.

The identified anchor words in the closed captions then inherit the timestamps of the corresponding tokens in the audio transcript, as indicated in step d) of the method according to the invention in its first aspect. From this point on, each anchor word will be characterized by its final starting and end times, respectively denoted by $ST_{AW\_FINAL}$ and $ET_{AW\_FINAL}$.

The synchronization module 1 further comprises a phrase alignment module 150 responsible for implementing step e) of the method according to the invention in its first aspect.

For a phrase containing one or multiple anchor words, its associated timestamps can be determined using the following procedure. The first step is iterating through its elements in order to determine the first $AW_{FIRST}$ and the last $AW_{LAST}$ anchor words in terms of temporal location. Using the delay between the assigned and the estimated start times of the first anchor word, the phrase's final start time $ST_{PHRASE\_FINAL}$ can be determined, while using the delay between the assigned and the estimated end times of the last anchor word, the phrase's final end time $ET_{PHRASE\_FINAL}$ can be determined as:

$$ST_{PHRASE\_FINAL} = ST_{PHRASE\_INIT} + \left(ST_{AW_{FIRST}\_FINAL} - ST_{AW_{FIRST}\_INIT}\right),$$

$$ET_{PHRASE\_FINAL} = ET_{PHRASE\_INIT} + \left(ET_{AW_{LAST}\_FINAL} - ET_{AW_{LAST}\_INIT}\right),$$

wherein $ST_{PHRASE\_INIT}$ and $ET_{PHRASE\_INIT}$ respectively designate the phrase initial start and end times, $ST_{AW_{FIRST}\_FINAL}$ and $ST_{AW_{FIRST}\_INIT}$ designate the first anchor word's assigned and estimated start times, respectively, and $ET_{AW_{LAST}\_FINAL}$ and $ET_{AW_{LAST}\_INIT}$ designate the last anchor word's assigned and estimated end times, respectively.

The aligned sentences/phrases with anchor words are denoted as *anchor phrases* (APs).

Figure 4 schematically illustrates an example of synchronizing a phrase PI with anchor words by shifting it to obtain the anchor phrase AP, using the timestamps of the list L4 of corresponding words from the audio transcript.

When displaying the closed captions on the screen, any video player uses only the timestamps assigned to each phrase. So, there is no need to further compute the timestamps associated to each individual word.

The sentences/phrases with no anchor words are recursively synchronized based on previously aligned APs and with respect to their original temporal duration in the initial caption transcript. A diagram illustrating the synchronization of a phrase with no anchor word is represented in Figure 5 where the phrase with no anchor word is noted "nonAP", the caption transcript with APs before synchronizing the nonAPs is referenced by C1 and the caption transcript after the nonAP's synchronization is referenced by C2.

The final start time $ST_{PHRASE\_FINAL}$ and the final end time $ET_{PHRASE\_FINAL}$ of the nonAP are determined by the respective equations:

$$ST_{PHRASE\_FINAL} = ET_{PHRASE\_FINAL\_AP_{prev}} + \frac{ST_{PHRASE\_FINAL\_APnext} - ET_{PHRASE\_FINAL\_AP_{prev}}}{ST_{PHRASE\_INIT\_AP_{next}} - ET_{PHRASE\_INIT\_AP_{prev}}} *$$

$$* (ST_{PHRASE_{INIT}} - ET_{PHRASE_{INIT}{AP_{prev}}}),$$

and

$$ET_{PHRASE\_FINAL} = ST_{PHRASE\_FINAL\_AP_{next}} + \frac{ST_{PHRASE\_FINAL\_APnext} - ET_{PHRASE\_FINAL\_AP_{prev}}}{ST_{PHRASE\_INIT\_AP_{next}} - ET_{PHRASE\_INIT\_AP_{prev}}} *$$

$$* (ET_{PHRASE_{INIT}} - ST_{PHRASE_{INIT}{AP_{next}}})$$

wherein $ET_{PHRASE\_FINAL\_AP_{prev}}$ designates the final end time of the previous anchor phrase respectively to the phrase with no anchor word, $ST_{PHRASE\_FINAL\_APnext}$ the final start time of the next anchor phrase respectively to the phrase with no anchor word, $ST_{PHRASE\_INIT\_APnext}$ the initial start time of the next anchor phrase respectively to the phrase with no anchor word and $ET_{PHRASE\_INIT\_APprev}$ the initial end time of the previous anchor phrase respectively to the phrase with no anchor word.

The synchronization module 1 also comprises a module 160 responsible for adjusting the synchronized phrases' timestamps with respect to a given audiovisual standard, e.g. the CSA ("Conseil Superieur de l'Audiovisuel") in France, especially regarding the appropriate time of reading when a phrase is displayed on the screen.

For instance, according to CSA, the recommended minimum duration for reading (*i.e.,* the number of seconds necessary for a phrase to be displayed on the screen) depends on the number of characters of the phrase, as presented in the table below where "Frames" and "No chars" respectively designate the number of frames a phrase should be displayed on the screen and the number of characters in a phrase. For phrases with a variable number of characters, the display time can be approximated using polynomial fitting curves.

| Frames | 20 | 25 | 30 | 35 | 40 | 45 | 50 | 55 | 60 | 65 | 70 | 75 | 80 | 85 | 90 | 95 | 100 | 105 | 110 | 115 |
|---|---|---|---|---|---|---|---|---|---|---|---|---|---|---|---|---|---|---|---|---|
| No chars | 9 | 12 | 13 | 14 | 16 | 18 | 20 | 24 | 26 | 30 | 33 | 36 | 40 | 45 | 50 | 55 | 60 | 65 | 70 | 72 |

The objective of the module 160 is to adjust the phrases with a temporal duration inferior to the time specified in the recommendation. First, based on the table above, the recommended duration of a given phrase is estimated, considering the phrase's number of characters. This duration is referred to as $REC_{PHRASE}$. Then, an analysis of all phrases from the synchronized closed captions is performed in terms of timestamps. This analysis comprises the following steps:

i) expanding the display time of a current phrase ($PHRASE_{crt}$) whose duration is inferior to a recommended minimum duration for reading, the expanding on the *left* side of the phrase being performed as follows:

- a recommended phrase duration, designated as $REC_{PHRASEcrt}$, based on the number of the characters of the phrase being estimated,
- a required bonus duration, denoted by $BONUS_{TIME}$, that represents the offset needed to expand the current phrase in either of the left and right directions, being computed as:

$$BONUS_{TIME} = \frac{REC_{PHRASEcrt} - len_{PHRASEcrt}}{2},$$

wherein $len_{PHRASEcrt}$ designates the duration of the current phrase,
- the time offset between the current and previous phrases, being defined as:

$$Space_{prev} = ST_{PHRASEcrt} - ET_{PHRASEprev}$$

- if $Space_{prev} > BONUS_{TIME}$, there is sufficient room to expand to the left the current phrase and its recommended final start time is set to :

$$ST_{PHRASEcrt\_FINAL\_REC} = ST_{PHRASEcrt\_FINAL} - BONUS_{TIME},$$

wherein $ST_{PHRASEcrt\_FINAL}$ designates the final start time of the current phrase,
- if $Space_{prev} < BONUS_{TIME}$, the maximum available dilatation time on the left $DT_{LEFT}$ being computed as:

$$DT_{LEFT} = min \left( \begin{array}{c} BONUS_{TIME} - Space_{prev}, \\ \frac{(len_{PHRASE_{prev}} - REC_{PHRASE_{prev}})}{2} \end{array} \right),$$

wherein $REC_{PHRASE_{prev}}$ designates the recommended duration of the previous phrase and $len_{PHRASE_{prev}}$ designates the duration of the previous phrase,

- 

$$\text{if } DT_{LEFT} < 0, ST_{PHRASE_{crt}\_FINAL\_REC} = ST_{PHRASE_{crt}\_FINAL} - \frac{Space_{prev}}{2}$$

- 

$$\text{if } DT_{LEFT} > 0, ST_{PHRASE_{crt}\_FINAL\_REC} = ST_{PHRASE_{crt}\_FINAL} - Space_{prev} - DT_{LEFT}$$

and the recommended final end time of the previous phrase being set to:

$$ET_{PHRASE_{prev}\_FINAL\_REC} = ET_{PHRASE_{prev}\_FINAL} - DT_{LEFT};$$

- Finally, the final start time of the current phrase ($PHRASE_{crt}$) as well as the final end time of the previous phrase ($PHRASE_{prev}$) are set to the newly computed recommended values:

$$ST_{PHRASE_{crt}\_FINAL} = ST_{PHRASE_{crt}\_FINAL\_REC}$$

$$ET_{PHRASE_{prev}\_FINAL} = ET_{PHRASE_{prev}\_FINAL\_REC}$$

ii) expanding the display time of a current phrase whose duration is inferior to a recommended minimum duration for reading, the expanding on the *right* side of the phrase being performed as follows:

- a recommended phrase duration, designated as $REC_{PHRASE_{crt}}$, based on the number of the characters of the phrase being estimated,
- the time offset between the current and next phrases being defined as:

$$Space_{next} = ST_{PHRASE_{next}} - ET_{PHRASE_{crt}}$$

- if $Space_{next} > BONUS_{TIME}$, there is sufficient room to expand to the right the current phrase, and its recommended final end time is set to :

$$ET_{PHRASE_{crt}\_FINAL\_REC} = ET_{PHRASE_{crt}\_FINAL} + BONUS_{TIME}, \quad \text{wherein} \quad ET_{PHRASE_{crt}\_FINAL}$$

designates the final end time of the current phrase,
- if $Space_{next} < BONUS_{TIME}$, the maximum available dilatation time on the right $DT_{RIGHT}$ being computed as:

$$DT_{RIGHT} = min \left( \begin{array}{c} BONUS_{TIME} - Space_{next}, \\ \frac{(len_{PHRASE_{next}} - REC_{PHRASE_{next}})}{2} \end{array} \right),$$

wherein $REC_{PHRASE_{nexi}}$ designates the recommended duration of the next phrase and $len_{PHRASE_{next}}$ designates the duration of the next phrase,

- 

$$\text{if } DT_{RIGHT} < 0, ET_{PHRASE_{crt}\_FINAL\_REC} = ET_{PHRASE_{crt}\_FINAL} + \frac{Space_{next}}{2}$$

$$\text{if } DT_{RIGHT} > 0, ET_{PHRASE_{crt}\_FINAL\_REC} = ET_{PHRASE_{crt}\_FINAL} + Space_{next} + DT_{RIGHT}$$

and the recommended final start time of the next phrase being set to:

$$ST_{PHRASE_{next}\_FINAL\_REC} = ST_{PHRASE_{next}\_FINAL} + DT_{RIGHT};$$

wherein $ST_{PHRASE_{next}\_FINAL}$ designates the final start time of the next phrase,

- Finally, the final end time of the current phrase ($PHRASE_{crt}$) as well as the final start time of the next phrase ($PHRASE_{next}$) are set to the computed recommended values:

$$ST_{PHRASE_{next}\_FINAL} = ST_{PHRASE_{next}\_FINAL\_REC}$$

$$ET_{PHRASE_{crt}\_FINAL} = ET_{PHRASE_{crt}\_FINAL\_REC}$$

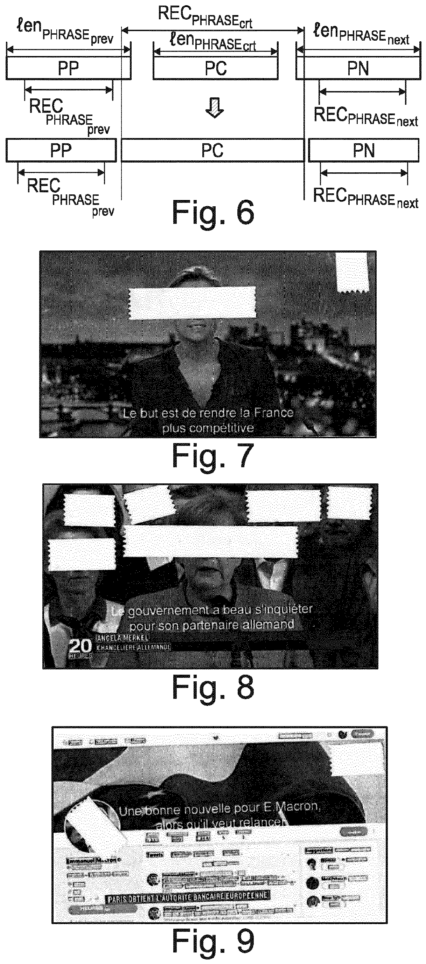

A diagram illustrating an example of a phrase alignment with respect to the recommendation is represented in Figure 6 where PC, PP and PN refer respectively to PHRASE$_{crt}$, PHRASE$_{prev}$ and PHRASE$_{next}$.

**Closed caption positioning module**

The closed caption positioning module 2 implements the method according to the invention in its second aspect.

The positioning module comprises a video processing module 26 taking as input the video document 25 to analyze the video content, especially in terms of semantic information existent in the frames.

An efficient and accurate text detection using the EAST algorithm as presented in the paper X. Zhou et al. "EAST: An efficient and accurate scene text detector" may be used. The analysis performed by the video processing module 26 uses the neural network model from the text detection framework 33, which is trained to directly predict the existence of text instances and their geometries from full images. The model is a fully convolutional neural network adapted for text detection that outputs dense per-pixel predictions of words or text lines. In some cases, the scene text presents additional complexities, compared with regular text, such as multi-orientation or multi-lingual issues. Since the purpose is to place the closed captions on the video stream, all detected texts that are not in a horizontal position are discarded, because such information is not relevant, most of the time, from the perspective of an end user. After the scene text is extracted from the video stream, a further analysis is performed in order to determine an appropriate position for the closed captions.

A set of rules that need to be respected have been established for displaying the closed captions:

- The line length is limited to 37 fixed-width (monospaced) characters;
- each line should have a single complete sentence;
- the maximum number of lines to be displayed is limited to two;
- the closed captions are broken at logical points; and
- the ideal line-break is a piece of punctuation like a full stop, comma or dash.

The following cases have been identified and addressed:

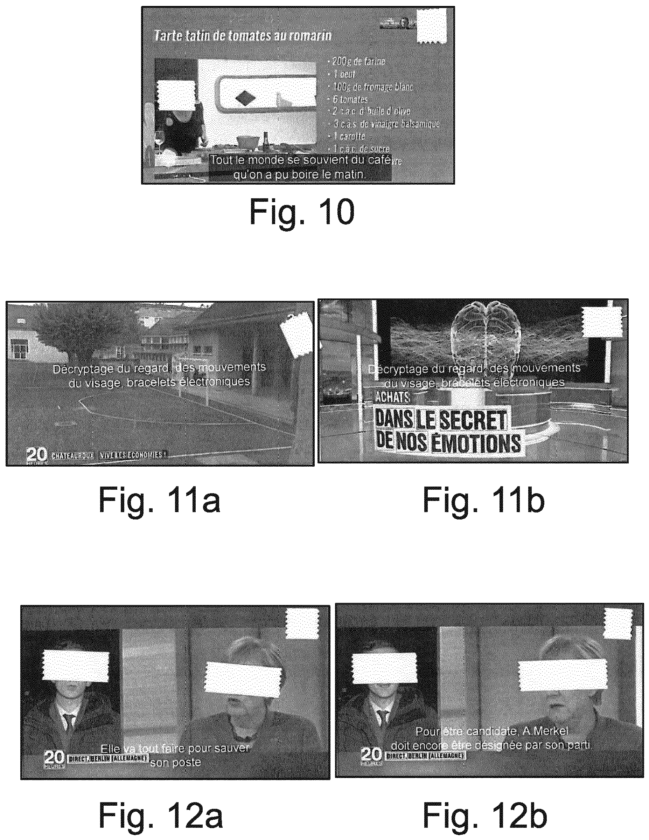

- *Case 1: No scene text* - when no horizontal text has been detected within the video frame, the closed caption is positioned on the default location (*i.e.,* on the bottom of the viewer screen), as illustrated in Figure 7.
- *Case 2: Closed caption overlapping scene text* - when horizontal text is detected on the bottom part of the video frame (on the default location), the closed caption is moved up on the video frame, in order not to cover the detected scene text. The novel location is set so as to minimize the distance between the current location and the default position as presented in Figure 8.
- *Case 3: Scene text identified in various parts of the video frame and overlapping the closed caption* - when horizontal text is detected on the bottom part of the video frame (on the default location) and in multiple locations on the frame, the closed caption is moved up on the first available location with the constraint not to overlap any of the detected text, as represented in Figure 9.
- *Case 4: Scene text identified in various parts of the video frame with no empty place* - when horizontal text is detected on the bottom part of the video frame and in multiple locations of the video frame and there is no available position to place the closed caption to prevent the overlap, the closed caption is positioned in the default location, even if it overlaps the scene text, but with a colored bounding box that makes it easier to read, as illustrated in Figure 10.

- *Case 5: Scene text overlapping for limited time* -when a scene text is displayed only for a short duration of time (*e.g.,* several seconds) while presenting an overlap with the default position, the closed caption is placed into the final location that insures no overlap with the scene text, as shown in Figure 11(b), even if for some time the closed caption is above the default position and no overlap with the scene text can be detected, as represented in Figure 11(a). Such a strategy avoids abrupt, short changes in the closed caption position, which are visually uncomfortable.
- *Case 6: Scene text overlapping short/long closed caption lines* - when horizontal text is detected on the bottom part of the video frame, if the line of the closed caption that needs to be displayed is short and does not overlap with the detected text, the closed caption is positioned in the default location, as illustrated in Figure 12(a). For long lines of closed captions, a novel location therefor is set so as to minimize the distance between the default position and the novel position, as represented in Figure 12(b).

As a consequence, the synchronization module 1 and the positioning module 2 transform the captions associated to the input multimedia file 4 into synchonized and well-positioned ones 5, easy to read for the viewer.

The invention is not limited to the examples that have just been described. In particular, features from the embodiments illustrated may be combined within embodiments that are not illustrated.

The invention can be combined with other techniques, such as placing the captions on the frame close to their corresponding speaker using artificial intelligence pretrained to recognize faces and voices, when there are many speakers involved.

The expression "comprising a" or "including a" must be understood as being synonymous with "comprising at least one" or "including at least one", unless specified otherwise.

## Claims

1. Method for automatically synchronizing with a video stream a caption transcript made of phrases each having an initial phrase timestamp defining a start time and an end time of the phrase, the method comprising:

   a. generating an audio transcript of the video stream using automatic speech recognition, with timestamps associated to words of the audio transcript,
   b. tokenizing both caption and audio transcripts and estimating timestamps of tokens of the caption transcript based at least on the initial phrase timestamp of the phrase containing said tokens and their position within the phrase,
   c. identifying anchor words in the caption transcript corresponding to tokens of the caption transcript orthographically matching with tokens of the audio transcript,
   d. assigning to the anchor words corrected timestamps corresponding to timestamps of the matching tokens in the audio transcript, and
   e. generating a synchronized caption transcript with final phrase timestamps obtained by applying to the phrases' initial timestamps time shifts based on time differences between the assigned timestamps of the anchor words and the estimated timestamps of said anchor words.

2. Method according to the preceding claim, tokenizing in step b) comprising at least one of:

   - removing punctuation and non-alphabetic characters in both transcripts,
   - converting upper-case words into lower-case in both transcripts,
   - removing words with less than four characters from both transcripts,
   - stemming the words in both transcripts, and
   - removing words from both transcripts, said words belonging to a library comprising a set of words considered to be very common, especially logic linkers.

3. Method according to either one of the preceding claims, the estimation of the timestamps of the caption transcript's tokens comprising the estimation of a start time ($ST_{INIT}$) and an end time ($ET_{INIT}$) for at least one timestamp of at least one token pertaining to one phrase, according to the equations:

$$ST_{INIT} = ST_{PHRASE\_INIT} + Time\_per\_character_{INIT} * No_{CHAR_{TO_{TOKEN}}}$$

and

$$ET_{INIT} = ST_{INIT} + Time\_per\_character_{INIT} * No_{CHAR\_OF\_TOKEN},$$

wherein *Time_per_character$_{INIT}$* designates the time increment assigned to each character within said one phrase and is defined by:

$$Time\_per\_character_{INIT} = \frac{ET_{PHRASE\_INIT} - ST_{PHRASE\_INIT}}{No_{CHARACTERS\_PHRASE}}$$

wherein $No_{CHARACTERS\_PHRASE}$ designates the number of characters within the phrase, $ST_{PHRASE\_INIT}$ the phrase start time, $ET_{PHRASE\_INIT}$ the phrase end time, $NO_{CHAR\_OF\_TOKEN}$ the number of characters of said one token and

$No_{CHAR_{TO_{TOKEN}}}$ the number of characters covered, within the phrase, until the token, being obtained from the caption transcript before its tokenization.

4. Method according to any one of the preceding claims, the identification in step c) comprising, for a current token of the caption transcript, searching in the audio transcript for matches with said token within a temporal search window where a forward and backward search procedure, with reference to said token, is applied with a maximum time shift in each direction of search, defining a number of forward and backward neighboring tokens in the caption transcript, the temporal search window preferably varying between 30 and 90 seconds in each direction of search.

5. Method according to the preceding claim, comprising:

- when a unique match is identified in the audio transcript, said token of the caption transcript being declared as an anchor word, otherwise:
- said token of the caption transcript being declared as an anchor word if at least one condition relating to temporal distances is fulfilled, a temporal distance being defined as the absolute difference between two start times, said at least one condition being defined by the equation:

$$\forall T_i^{CC} \in \mathcal{N}(T_c^{CC}), \quad d^{ASR}(T_c^{CC}, T_i^{CC}) \leq \alpha \cdot d^{CC}(T_c^{CC}, T_i^{CC})$$

wherein $T_c^{CC}$ designates said token,

$$\mathcal{N}(T_c^{CC})$$

the set of its neighboring tokens in the caption transcript, $d^{CC}(T_c^{CC}, T_i^{CC})$ the temporal distance between the said token's estimated start time and the estimated start time of one of its neighbors in the caption transcript,

$\alpha$ a user-specified parameter, preferably being set in the [2, 4] interval, and $d^{ASR}(T_c^{CC}, T_i^{CC})$ the temporal distance between the start time of said token's one match and the start time of said one of its neighbors' one match in the audio transcript, $d^{ASR}(T_c^{CC}, T_i^{CC})$ being defined by the equation:

$$d^{ASR}(T_c^{CC}, T_i^{CC}) = \min_{T_i^{ASR} \in \aleph^{ASR}(T_c^{CC})} \min_{T_j^{ASR} \in \aleph^{ASR}(T_i^{CC})} d^{ASR}(T_i^{ASR}, T_j^{ASR})$$

where $\aleph^{ASR}\left(T_i^{CC}\right)$ designates the set of matches with each neighboring token

$$T_i^{CC} \in \mathcal{N}(T_c^{CC})$$

of said token $T_c^{CC}$.

**6.** Method according to any one of the preceding claims, comprising ignoring two identified anchor words if their chronological order is opposite to the chronological order of their matching tokens in the audio transcript.

**7.** Method according to any one of the preceding claims, step e) comprising:

- determining the first ($AW_{FIRST}$) and the last ($AW_{LAST}$) anchor words in terms of temporal location in a phrase containing at least one anchor word,
- determining the final timestamp defined by the phrase's final start time ($ST_{PHRASE\_FINAL}$) and the phrase's final end time ($ET_{PHRASE\_FINAL}$), as follows:

$$ST_{PHRASE\_FINAL} = ST_{PHRASE\_INIT} + \left(ST_{AW_{FIRST}\_FINAL} - ST_{AW_{FIRST}\_INIT}\right),$$

and

$$ET_{PHRASE\_FINAL} = ET_{PHRASE\_INIT} + \left(ET_{AW_{LAST}\_FINAL} - ET_{AW_{LAST}\_INIT}\right),$$

wherein $ST_{PHRASE\_INIT}$ and $ET_{PHRASE\_INIT}$ respectively designate the phrase initial start and end times, $ST_{AW_{FIRST}\_FINAL}$ and $ST_{AW_{FIRST}\_INIT}$ designate the first anchor word's assigned and estimated start times, respectively, and $ET_{AW_{LAST}\_FINAL}$ and $ET_{AW_{LAST}\_INIT}$ designate the last anchor word's assigned and estimated end times, respectively,
said phrase thus processed being called an *anchor phrase*.

**8.** Method according to the preceding claim, a phrase with no anchor word being synchronized based on anchor phrases and with respect to the temporal duration of said phrase in the initial caption transcript.

**9.** Method according to the preceding claim, the final start time $ST_{PHRASE\_FINAL}$ and the final end time $ET_{PHRASE\_FINAL}$ of the phrase with no anchor word being determined by the respective equations:

$$ST_{PHRASE\_FINAL} = ET_{PHRASE\_FINAL\_AP_{prev}} + \frac{ST_{PHRASE\_FINAL\_AP_{next}} - ET_{PHRASE\_FINAL\_AP_{prev}}}{ST_{PHRASE\_INIT\_AP_{next}} - ET_{PHRASE\_INIT\_AP_{prev}}} *$$

$$* (ST_{PHRASE_{INIT}} - ET_{PHRASE_{INIT}AP_{prev}}),$$

and

$$ET_{PHRASE\_FINAL} = ST_{PHRASE\_FINAL\_AP_{next}} + \frac{ST_{PHRASE\_FINAL\_AP_{next}} - ET_{PHRASE\_FINAL\_AP_{prev}}}{ST_{PHRASE\_INIT\_AP_{next}} - ET_{PHRASE\_INIT\_AP_{prev}}} *$$

$$* (ET_{PHRASE_{INIT}} - ST_{PHRASE_{INIT}AP_{next}})$$

wherein $ET_{PHRASE\_FINAL\_AP_{prev}}$ designates the final end time of the previous anchor phrase respectively to the phrase with no anchor word, $ST_{PHRASE\_FINAL\_AP_{next}}$ the final start time of the next anchor phrase respectively to the phrase with no anchor word, $ST_{PHRASE\_INIT\_APnext}$ the initial start time of the next anchor phrase respectively to the phrase with no anchor word and $ET_{PHRASE\_INIT\_APprev}$ the initial end time of the previous anchor phrase respectively to the phrase with no anchor word.

**10.** Method according to any one of the preceding claims, comprising after step e):

i) expanding the display time of a current phrase whose duration is inferior to a recommended minimum duration for :

- a recommended phrase duration, designated as $REC_{PHRASE_{crt}}$, based on the number of the characters of the phrase being estimated,
- a required bonus duration, denoted by $BONUS_{TIME}$, that represents the offset needed to expand the current phrase in either of the left and right directions, being computed as:

$$BONUS_{TIME} = \frac{REC_{PHRASE_{crt}} - len_{PHRASE_{crt}}}{2},$$

wherein $len_{PHRASE_{crt}}$ designates the duration of the current phrase,
- the time offset between the current and previous phrases being defined as:

$$Space_{prev} = ST_{PHRASE_{crt}} - ET_{PHRASE_{prev}}$$

- if $Space_{prev} > BONUS_{TIME}$, the recommended final start time of the current phrase being set to :

$$ST_{PHRASE_{crt}\_FINAL\_REC} = ST_{PHRASE_{crt}\_FINAL} - BONUS_{TIME},$$

wherein $ST_{PHRASE_{crt}\_FINAL}$ designates the final start time of the current phrase,
- if $Space_{prev} < BONUS_{TIME}$, the maximum available dilatation time on the left $DT_{LEFT}$ being computed as:

$$DT_{LEFT} = min \left( \begin{array}{c} BONUS_{TIME} - Space_{prev}, \\ \frac{(len_{PHRASE_{prev}} - REC_{PHRASE_{prev}})}{2} \end{array} \right),$$

wherein $REC_{PHRASE_{prev}}$ designates the recommended duration of the previous phrase and $len_{PHRASE_{prev}}$ designates the duration of the previous phrase,
-

$$if\ DT_{LEFT} < 0,\ ST_{PHRASE_{crt}\_FINAL\_REC} = ST_{PHRASE_{crt}\_FINAL} - \frac{Space_{prev}}{2}$$

- if $DT_{LEFT} > 0$, $ST_{PHRASE_{crt}\_FINAL\_REC} = ST_{PHRASE_{crt}\_FINAL}$ - $Space_{prev}$ - $DT_{LEFT}$ and the recommended final end time of the previous phrase being set to:

$$ET_{PHRASE_{prev}\_FINAL\_REC} = ET_{PHRASE_{prev}\_FINAL} - DT_{LEFT};$$

wherein $ET_{PHRASE_{prev}\_FINAL}$ designates the final end time of the previous phrase,
- the final start time of the current phrase and the final end time of the previous phrase being set to the computed recommended values:

$$ST_{PHRASE_{crt}\_FINAL} = ST_{PHRASE_{crt}\_FINAL\_REC}$$

$$ET_{PHRASE_{prev}\_FINAL} = ET_{PHRASE_{prev}\_FINAL\_REC}$$

ii) expanding the display time of a current phrase whose duration is inferior to a recommended minimum duration for reading, the expanding on the right side of the phrase being performed as follows:

- a recommended phrase duration, designated as $REC_{PHRASE_{crt}}$, based on the number of the characters of the phrase being estimated,
- the time offset between the current and next phrases being defined as:

$$Space_{next} = ST_{PHRASE_{next}} - ET_{PHRASE_{crt}}$$

- if $Space_{next} > BONUS_{TIME}$, the recommended final end time of the current phrase being set to :

$$ET_{PHRASE_{crt}\_FINAL\_REC} = ET_{PHRASE_{crt}\_FINAL} + BONUS_{TIME},$$

wherein $ET_{PHRASE_{crt}\_FINAL}$ designates the final end time of the current phrase,
- if $Space_{next} < BONUS_{TIME}$, the maximum available dilatation time on the right $DT_{RIGHT}$ being computed as:

$$DT_{RIGHT} = min\left( \begin{matrix} BONUS_{TIME} - Space_{next}, \\ \frac{(len_{PHRASE_{next}} - REC_{PHRASE_{next}})}{2} \end{matrix} \right),$$

wherein $REC_{PHRASE_{nexi}}$ designates the recommended duration of the next phrase and $len_{PHRASE_{next}}$ designates the duration of the next phrase,
-

$$if\ DT_{RIGHT} < 0,\ ET_{PHRASE_{crt}\_FINAL\_REC} = ET_{PHRASE_{crt}\_FINAL} + \frac{Space_{next}}{2}$$

- if $DT_{RIGHT} > 0$, $ET_{PHRASE_{crt}\_FINAL\_REC} = ET_{PHRASE_{crt}\_FINAL} + Space_{next} + DT_{RIGHT}$ and the recommended final start time of the next phrase being set to:

$$ST_{PHRASE_{next}\_FINAL\_REC} = ST_{PHRASE_{next}\_FINAL} + DT_{RIGHT},$$

wherein $ST_{PHRASE_{next}\_FINAL}$ designates the final start time of the next phrase,
- the final end time of the current phrase and the final start time of the next phrase being set to the computed recommended values:

$$ST_{PHRASE_{next}\_FINAL} = ST_{PHRASE_{next}\_FINAL\_REC}$$

$$ET_{PHRASE_{crt}\_FINAL} = ET_{PHRASE_{crt}\_FINAL\_REC}$$

11. Method for automatically placing captions on a video stream, the captions pertaining to a caption transcript synchronized with the video stream, preferably by a method according to any one of the preceding claims, comprising positioning the captions on a frame of the video stream according to an analysis of semantic information present in the frame, so that the captions do not overlap textual information present in the frame.

12. Method according to the preceding claim, the analysis of semantic information present in the frame comprising text detection in the frame using a neural network model trained to predict the existence of text instances and their geometries from full images, the model being preferably a fully-convolutional neural network adapted for text detection and outputting dense per-pixel predictions of words or text lines.

13. Method according to the preceding claim:

- in case no horizontal text is detected, the captions being positioned in a default position defined by predetermined display coordinates, preferably on the bottom part of the frame, especially on the lower third of the frame;
- in case horizontal text is detected on the bottom part of the frame, the captions being attributed a novel location by being moved up so as not to cover the detected text, the novel location being established so as to reduce its distance from the default position;
- in case text is detected in various parts of the frame, including the bottom part, the captions being moved up to the first available location with the constraint not to overlap any of the detected text;
- in case text is detected in various parts of the frame, including the bottom part, and there is no available position to place the captions to prevent the overlap, the latter being positioned in the default position, even if they overlap the detected text, with a colored bounding box making them easier to read;
- in case detected text is displayed on the frame only for a short duration, lower than the duration of the caption, while presenting an overlap with the default position, the captions being placed into a location that insures no overlap with the detected text, even if, for some time, the captions are above the default position and no overlap with the text is detected;
- in case horizontal text is detected on the bottom part of the frame, the captions to be displayed being placed on the bottom part of the frame if the length of the horizontal text is short enough such that no overlap occurs with the caption.

14. Method according to any one of claims 1 to 13, lines of captions being placed in accordance with at least one of the following rules:

- a line length not exceeding a predefined number of monospaced characters,
- a line corresponding to a single complete sentence,
- a maximum number of lines to be displayed being limited to two, and
- captions being broken at logical points, an ideal line-break being preferably a piece of punctuation, e.g. a period, a comma or a dash.

15. System (6) for automatically synchronizing a caption transcript with a video stream, comprising:

- a synchronization module (1) implementing the method according to any one of claims 1 to 10, and
- a positioning module (2) implementing the method according to any one of claims 11 to 14.

Fig. 1

Fig. 2

$$d^{cc}(T_c^{cc}, T_i^{cc})$$

L1

$$T_c^{cc}$$

L3

$$d^{ASR}(T_i^{ASR}, T_j^{ASR})$$

L2

L2

## Fig. 3

$$ET_{AW_{LAST}\text{-}INIT}$$

P1

$$ST_{PHRASE\_INIT} \quad ST_{AW_{FIRST}\text{-}INIT} \quad ET_{PHRASE\_INIT}$$

L4

$$ST_{AW_{FIRST}\text{-}FINAL} \quad ET_{AW_{LAST}\text{-}FINAL}$$

AP

$$ST_{PHRASE\_FINAL} \quad ET_{PHRASE\_FINAL}$$

## Fig. 4

$$ET_{PHRASE\_INIT\_AP_{prev}}$$

AP    nonAP    nonAP    AP

C1

$$ST_{PHRASE\_INIT\_AP_{next}}$$

$$ST_{PHRASE\_INIT} \quad ET_{PHRASE\_INIT}$$

AP    nonAP    nonAP    AP

C2

$$ST_{PHRASE\_FINAL\_AP_{next}}$$

$$ET_{PHRASE\_FINAL\_AP_{prev}}$$

$$ST_{PHRASE\_FINAL} \quad ET_{PHRASE\_FINAL}$$

## Fig. 5

Fig. 6

Fig. 7

Fig. 8

Fig. 9

Fig. 10

Fig. 11a

Fig. 11b

Fig. 12a

Fig. 12b

Europäisches
Patentamt
European
Patent Office
Office européen
des brevets

# EUROPEAN SEARCH REPORT

Application Number

EP 19 30 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/198234 A1 (KIM YEON-JUN [US] ET AL) 7 July 2016 (2016-07-07) * abstract; figures 2-5 * | 1-15 | INV. G11B27/10 G10L15/26 H04N21/2343 H04N21/845 |
| A,D | PEDRO J MORENO ET AL: "A RECURSIVE ALGORITHM FOR THE FORCED ALIGNMENT OF VERY LONG AUDIO SEGMENTS", 5TH INTERNATIONAL CONFERENCE ON SPOKEN LANGUAGE PROCESSING SYDNEY, AUSTRALIA, 30 November 1998 (1998-11-30), XP55689266, * abstract; figure 1 * * paragraph [02.1] * * paragraph [02.3] * | 1-15 | |
| A,D | Chih-Wei Huang: "Automatic closed caption alignment based on speech recognition transcripts Automatic Closed Caption Alignment Based on Speech Recognition Transcripts", , 26 May 2014 (2014-05-26), XP55689262, Retrieved from the Internet: URL:https://www.researchgate.net/profile/Chih-Wei_Huang5/publication/228689689_Automatic_closed_caption_alignment_based_on_speech_recognition_transcripts/links/02e7e527755b7e44e7000000.pdf [retrieved on 2020-04-24] * abstract * * paragraph [0001] * * paragraph [2.3.1] * | 1-15 | |

TECHNICAL FIELDS
SEARCHED      (IPC)

G10L
G11B
H04N

-/--

The present search report has been drawn up for all claims

| Place of search | Date of completion of the search | Examiner |
|---|---|---|
| The Hague | 28 April 2020 | Giannotti, Pantaleo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 30 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | TIMOTHY J HAZEN: "Automatic Alignment and Error Correction of Human Generated Transcripts for Long Speech Recordings", INTERSPEECH 2006 - ICSLP NINTH INTERNATIONAL CONFERENCE ON SPOKEN LANGUAGE PROCESSING PITTSBURGH, PA, USA, 17 September 2006 (2006-09-17), XP55689268, * abstract * * paragraph [03.2] * | 1-15 | |
| A | US 6 442 518 B1 (VAN THONG JEAN-MANUEL [US] ET AL) 27 August 2002 (2002-08-27) * abstract; figures 1,3a,3b,4 * | 1-15 | |
| A | US 8 564 721 B1 (BERRY MATTHEW [US] ET AL) 22 October 2013 (2013-10-22) * abstract * | 1-15 | |
| A,D | GARCIA J E ET AL: "Audio and text synchronization for TV news subtitling based on Automatic Speech Recognition", BROADBAND MULTIMEDIA SYSTEMS AND BROADCASTING, 2009. BMSB '09. IEEE INTERNATIONAL SYMPOSIUM ON, IEEE, PISCATAWAY, NJ, USA, 13 May 2009 (2009-05-13), pages 1-6, XP031480110, ISBN: 978-1-4244-2590-7 * abstract * | 1-15 | TECHNICAL FIELDS SEARCHED (IPC) |
| A | WO 2015/142628 A1 (MICROSOFT TECHNOLOGY LICENSING LLC [US]) 24 September 2015 (2015-09-24) * abstract; figures 2,4a,4b,5 * | 1-15 | |

-/--

The present search report has been drawn up for all claims

| Place of search | Date of completion of the search | Examiner |
|---|---|---|
| The Hague | 28 April 2020 | Giannotti, Pantaleo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 30 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/118324 A1 (CHASE INFORMATION TECHNOLOGY SERVICES LTD [GB] ET AL.) 13 August 2015 (2015-08-13) * abstract; figures 5,6 * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 28 April 2020 | Giannotti, Pantaleo |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

page 3 of 3

## ANNEX TO THE EUROPEAN SEARCH REPORT
## ON EUROPEAN PATENT APPLICATION NO.

EP 19 30 6686

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2020

| Patent document cited in search report | | Publication date | Patent family member(s) | | Publication date |
|---|---|---|---|---|---|
| US 2016198234 | A1 | 07-07-2016 | US 2011040559 A1<br>US 2015046160 A1<br>US 2016198234 A1<br>US 2017061986 A1 | | 17-02-2011<br>12-02-2015<br>07-07-2016<br>02-03-2017 |
| US 6442518 | B1 | 27-08-2002 | NONE | | |
| US 8564721 | B1 | 22-10-2013 | NONE | | |
| WO 2015142628 | A1 | 24-09-2015 | US 2015271442 A1<br>WO 2015142628 A1 | | 24-09-2015<br>24-09-2015 |
| WO 2015118324 | A1 | 13-08-2015 | US 2017011024 A1<br>WO 2015118324 A1 | | 12-01-2017<br>13-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.E. GARCIA et al.** *Audio and text synchronization for TV news subtitling based on Automatic Speech Recognition*
- **P. J. MORENO et al.** *A recursive algorithm for the forced alignment of very long audio segments*
- **P. WAMBACQ et al.** *Efficiency of Speech Alignment for Semi-Automated Subtitling in Dutch*
- **A. KATSAMANIS et al.** *SailAlign: Robust long speech-text alignment*
- **T. J. HAZEN.** *Automatic alignment and error correction of human generated transcripts for long speech recordings*
- **N. BRAUNSCHWEILER et al.** *Lightly supervised recognition for automatic alignment of large coherent speech recordings*
- **A. HAUBOLD et al.** *Alignment of Speech to Highly Imperfect Text Transcriptions*
- **S. HOFFMAN et al.** *Text-to-speech alignment of long recordings using universal phone models*
- **I. AHMED et al.** *Technique for automatic sentence level alignment of long speech and transcripts*
- **X. ANGUERA et al.** *Audio-to-text alignment for speech recognition with very limited resources*
- **G. BORDEL et al.** *Probabilistic Kernels for Improved Text-to-Speech Alignment in Long Audio Tracks*
- **B. AXTELL et al.** *Touch-Supported Voice Recording to Facilitate Forced Alignment of Text and Speech in an E-Reading Interface*
- **A. BROWN et al.** *Dynamic Subtitles: the User Experience*
- **C. HUANG et al.** *Automatic Closed Caption Alignment Based on Speech Recognition Transcripts*
- **Z. YING et al.** *Towards end-to-end speech recognition with deep convolutional neural networks*
- **X. ZHOU et al.** *EAST: An efficient and accurate scene text detector*